Europäisches Patentamt

(19) European Patent Office

Office européen des brevets

(11) Veröffentlichungsnummer: **0 269 559**
**B1**

(12) EUROPÄISCHE PATENTSCHRIFT

(45) Veröffentlichungstag der Patentschrift:
08.08.90

(51) Int. Cl.⁵: **D05B 75/06, B23Q 1/26**

(21) Anmeldenummer: **87810520.4**

(22) Anmeldetag: **09.09.87**

(54) **Hubeinrichtung.**

(30) Priorität: **21.10.86 DE 3635700**

(43) Veröffentlichungstag der Anmeldung:
**01.06.88 Patentblatt 88/22**

(45) Bekanntmachung des Hinweises auf die Patenterteilung:
**08.08.90 Patentblatt 90/32**

(84) Benannte Vertragsstaaten:
**AT BE CH DE ES FR GB GR IT LI LU NL SE**

(56) Entgegenhaltungen:
**CH-A- 450 870**
**DE-C- 807 152**
**GB-A- 1 117 055**
**US-A- 4 559 879**

(73) Patentinhaber: **VISITA MTC LTD., Gartenstrasse 3,
CH-7001 Chur(CH)**

(72) Erfinder: **Schmeller, Michael, Falkensteinweg 28,
D-8962 Pfronten-Mellingen(DE)**

(74) Vertreter: **Riederer, Conrad A., Dr., Bahnhofstrasse 10,
CH-7310 Bad Ragaz(CH)**

ACTORUM AG

**Beschreibung**

Die Erfindung betrifft eine Hubeinrichtung für Lasten und Geräte, bestehend aus mindestens einer Säule, an der ein Wagen mit Hubplattform auf- und abbewegbar geführt ist, der zwei einander gegenüberliegende Wälzlager-Anordnungen aufweist, zwischen denen die Säule sowohl in Längsrichtung des Säulenquerschnitts als auch rechtwinklig dazu eingespannt ist und jede Wälzlageranordnung mit zwei spiegelsymmetrisch zur Längsachse des Säulenquerschnittes angeordneten Führungsflächen der Säulen in Berührung steht.

Eine solche Hubeinrichtung ist bekannt (siehe z.B. US-A 455 879). Sie dient insbesondere zum Einbau in ein Nähmöbel. Auf der Plattform ist eine Nähmaschine montiert, die mit dem Lift bei Nichtgebrauch abgesenkt werden kann und in verschieden hohen Arbeitsstellungen hochgefahren werden kann. Solche Nähmaschinenlifte existieren als Einsäulenlifte und als Portallifte.

Die bekannte Hubeinrichtung verwendet für jede Wälzlager-Anordnung vier Kugellager, die so positioniert sind, daß sie im Betriebszustand mit Vorspannung an den Führungsflächen der Säule anliegen, die aus gebogenem bzw. gekantetem Stahlblech besteht. Beim Betrieb der Nähmaschinen treten Schwingungen auf, die über die KUgellager auf die Säule und damit auf das gesamte Möbel übertragen werden. Bei manchen Nähmaschinen führt dies zu empfindlichen Störungen beim Nähen. Weiterhin ist nachteilig, daß die Kugellager und die Führungsflächen der Säule einem erheblichen Verschließ ausgesetzt sind. Die hohen Andrückkräfte der Kugellager an den Führungsflächen sind nötig, um einen wackelfreien Lauf des Wagens sicherzustellen. Die Reaktionskräfte werden auf die Achsen der Kugellager übertragen. Schon nach gewisser Betriebszeit bilden sich Riefen in den Führungsflächen und es ist eine Nachstellung der Kugellager erforderlich. Nach einer gewissen Betriebszeit geht der gleichmäßige und vibrationsfreie Lauf des Wagens verloren.

Aufgabe der Erfindung ist es, die bekannte Hubeinrichtung dahingehend zu verbessern, daß die beim Nähen auftretenden Schwingungen gedämpft werden und nicht mehr oder wenigstens stark reduziert auf die Säule übertragen werden und daß ein ruhiger, vibrationsfreier Lauf des Wagens auch nach langer Betriebszeit gewährleistet ist.

Diese Aufgabe wird erfindungsgemäß dadurch gelöst, daß die Säule aus einem Aluminium-Strangpreßprofil-Abschnitt besteht, bei dem die vier Führungsflächen - querschnittsmäßig gesehen - konvex gekrümmt sind, daß die Wälzlager anordnungen aus mindestens drei achsparallelen Rollen aus abriebfestem Kunststoff bestehen, daß jede Rolle einen mittleren, im Abstand von der Säule liegenden Wandabschnitt geringen Querschnittes sowie beidseitig angrenzende Laufflächen mit nach außen allmählich zunehmendem Querschnitt aufweist, deren Konturen - im Axialschnitt gesehen - konkav gekrümmt sind und im Betriebszustand über die ganze Breite an den Führungsflächen der Säule anliegen.

Anstelle der acht Kugellager verwendet die Erfindung im einfachsten Fall lediglich drei Rollen. Auf der einen Seite des Wagens werden eine obere und eine untere Rolle montiert, während auf der gegenüberliegenden Seite eine mittlere Rolle angeordnet wird. In einer weiteren Ausführung werden auf jeder Seite eine obere und eine untere Rolle eingesetzt. Dank der speziellen Formgebung der Rollen wird die Säule in Achsrichtung der Rolle eingespannt. Die Vorspannung wird also allenfalls zu einem sehr kleinen Teil auf die Achse übertragen. Der größte Teil der Kräfte wird von der Rolle selbst aufgenommen. Mit diesem Konzept wird eine wackelfreie Führung mit geringen Reaktionskräften erreicht, sodaß eine erhebliche Schwingungsdämpfung auf die Säule erzielt wird. Die glatten, in Längsrichtung absolut linearen Führungsflächen des Aluminium-Strangpreßprofils in Verbindung mit den Kunststoffrollen gewährleisten einen einwandfreien ruhigen Lauf auch nach langer Betriebszeit. Die Kunststoffrollen selbst bewirken eine weitere Schwingungsdämpfung.

Eine wichtige Weiterbildung besteht nun darin, daß die Querschnittskontur der Laufflächen der Rollen mit Bezug auf diejenige der Führungsflächen der Säule so abgestimmt ist, daß die axial außenliegenden Laufflächenbereiche bei nicht eingebauter Rolle an den Führungsflächen einer imaginären, in relativer Betriebsstellung gedachten Säule in diese eindringen und daß diese Laufflächenbereiche bei eingebauter Rolle unter lokaler elastischer Verformung der Kontur der Führungsflächen angepaßt sind. Dabei bildet vorzugsweise die an der Führungsfläche der Säule anliegende Querschnittskontur der Lauffläche mit der diametral gegenüberliegenden, um 180° geklappten unverformten Laufflächenkontur einen sichelförmigen Abschnitt. Dank dieses Merkmals verformen sich lediglich die axial außenliegenden Bereiche der Laufflächen jeder Rolle. Die Verformung ist elastisch. Diese axial außenliegenden Laufflächenbereiche, die auf dem größten Rollendurchmesser liegen, werden im eingebauten Zustand in axialer Richtung nach außen gedrückt. Damit wird eine elastische Einspannung der Säule erzielt, die im wesentlichen in Axialrichtung der Rolle wirkt. Die Reaktionskräfte werden in der Rolle absorbiert und nicht auf die Achse übertragen.

Eine bevorzugte Ausführungsform besteht darin, daß die Querschnittskonturen der Führungsflächen kreisförmig ausgebildet sind und die Konturen der Laufflächen durch Kurven gebildet sind, welche angrenzend an den Mittelabschnitt, der keinen Kontakt mit der Säule hat, auf demselben Kreis wie die jeweilige Führungsfläche liegen und im axial außenliegenden Bereich in einen konzentrischen Kreis mit kleinerem Radius enden. Mit dieser Gestaltung wird erreicht, daß die Verformung der Laufflächen mit wachsendem Laufflächenradius stetig zunimmt.

Weiterbildungen bestehen noch darin, daß die konvexen Führungsflächen der Säule paarweise wenigstens angenähert einen gemeinsamen Krümmungsmittelpunkt haben, daß je zwei nicht von derselben Rolle kontaktierte Führungsflächen durch eine ebene Verbindungswand zu einem geschlossenen Hohlprofil verbunden sind, daß der Säulenwandabschnitt, der zwei, von derselben Rolle kontaktierte Führungsflächen miteinander verbindet, im Bereich des mittleren, die Säule nicht berührenden Rollenabschnittes zurückgesetzt ist. Dabei ist vorzugsweise der zurückgesetzte Säulenwandabschnitt innenseitig von kreisförmiger Kontur, wobei sich an diesen Säulenwandabschnitt beidseitig in das Säuleninnere hineinragende Stege mit ebenfalls kreisförmiger konzentrischer Innenkontur anschließen, derart, daß der Säulenwandabschnitt mit den Stegen einen geschlitzten Ringzylinder bilden, in den oben und unten Gewinde eingeschnitten sind, sodaß in einfacher Weise obere und untere Montagequerstreben zur Befestigung der Säule im Möbel angeschraubt werden können.

Eine Ausgestaltung der Erfindung besteht darin, daß an den Enden einer Verbindungswand zwei gleich lange Querwände rechtwinklig nach außen vorstehen, die eine von außen offene Kammer zur Aufnahme einer endlosen Antriebskette begrenzen.

Der Wagen weist ein Gehäuse auf, das aus einem Strangpreßprofil in Form eines rechteckförmigen Ringkörpers besteht, von dessen Schmalseiten je zwei parallele kurze Lagerwände rechtwinklig nach innen ragen, in denen die Rollen gehaltert sind. Mindestens eine Rolle ist auf einer Achse drehbar gelagert, die radial mittels einer Nachstelleinrichtung verstellbar angeordnet ist. Zu diesem Zweck ist vorgesehen, daß sich in beiden Lagerwänden für die verstellbare Rolle bzw. für die verstellbaren Rollen in Verstellrichtung liegende, von außen zugängliche Gewinderbohrungen befinden, die je in ein, sich mit der Längsachse ebenfalls in Verstellrichtung erstreckendes Langloch hineinragen, in dem die Rollenachse gehalten ist. In den Gewindebohrungen sind Schraubbolzen aufgenommen, die gegen die Rollenachse drücken. Durch Verstellen der Schraubbolzen läßt sich der Anlagedruck der Rollen an der Säule fein einstellen und nachjustieren.

Anhand der Zeichnung, die ein Ausführungsbeispiel darstellt, sei die Erfindung näher beschrieben. Es zeigt

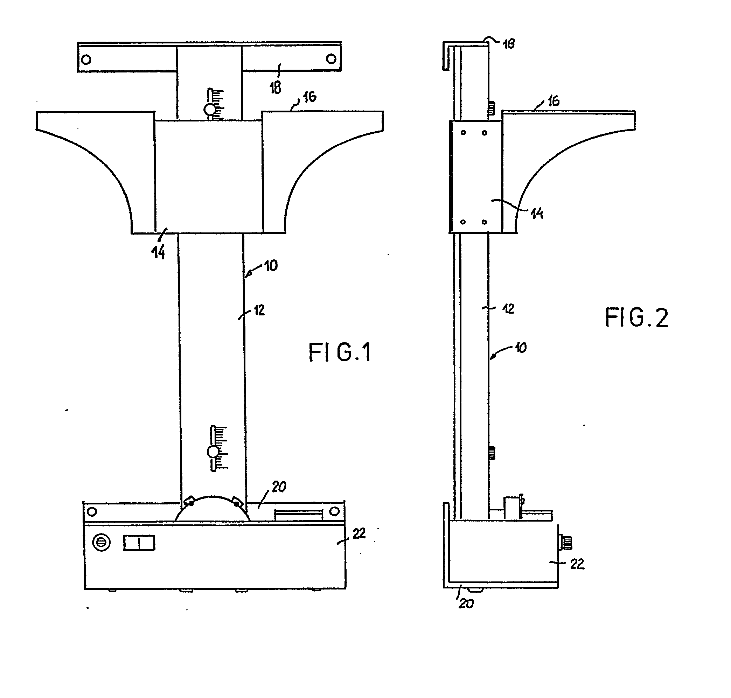

FIG. 1 Eine Vorderansicht der Hubeinrichtung,

FIG. 2 eine Seitenansicht der Hubeinrichtung gemäß FIG. 1,

FIG. 3 eine Draufsicht auf Säule und Wagen der Hubeinrichtung und

FIG. 4 eine vergrößerte Darstellung des in FIG.3 mit 4 bezeichneten Details.

Die allgemein mit 10 bezeichnete Hubeinrichtung besteht aus einer Säule 12, einem an dieser auf- und abbewegbar geführten Wagen 14 mit zwei Traversen, die eine Hubplattform 16 bilden, einer oberen, auf die Säule 12 aufgeschraubten Montagestrebe 18, einer von unten her an die Säule 12 angeschraubten unteren Montagestrebe 20 und einer an lezterer befestigten Konsole 22, die einen Antriebsmotor, Steuerelektronik und Betriebsschalter aufweist.

Die Säule 12 besteht aus einem Aluminium-Strangpreßprofil von länglichem Querschnitt. An beiden gegenüberliegenden Enden werden jeweils zwei Führungsflächen 24 gebildet, die auf einem Kreisbogen liegen, dessen Mittelpunkt mit 26 bezeichnet ist. Zwischen je zwei endseitigen Führungsflächen 24 befindet sich ein zurückgesetzter Säulenwandabschnitt 28, an den sich beidseitig in das Säuleninnere hineinragende gekrümmte Stege 30 anschließen, die zusammen mit dem Säulenwandabschnitt 28 einen geschlitzten Ring bilden, der sich in Form eines geschlitzten Ringkörpers über die ganze Länge der Säule 12 erstreckt und in den oben und unten Gewinde eingeschnitten sind. Je zwei, beidseitig der Querachse der Säule 12 liegende Führungsflächen 24 sind durch ebene Verbindungswände 32 verbunden, sodaß ein geschlossenes Hohlraumprofil entsteht. Von einer der Verbindungswände 32 ragen, an die Führungsflächen 24 anschließende Querwände 34 nach außen, die beide gleich lang sind und zusammen mit der anhängenden Verbindungswand 32 eine nach außen offene Kammer bilden, in welcher eine nicht dargestellte Antriebskette angeordnet wird.

Der Wagen 14 weist ein Gehäuse 36 auf, das aus einem kastenförmigen Aluminium-Strangpreß-Hohlprofil besteht, welches von jeder Querwand nach innen ragende Lagerwände 38 aufweist in denen jeweils eine obere und eine untere Achse 40 befestigt sind. Auf den Achsen 40 ist eine breite Rolle 42 drehbar gelagert, deren axiale Breite nahezu gleich der Außenbreite des Querschnittes der Säule 12 ist. Die vier Rollen 42 liegen achsparallel und bestehen aus abriebfestem Kunststoff.

Jede Rolle 42 weist einen mittleren, nicht mit der Säule 12 in Kontakt tretenden Abschnitt 44 und zwei daran nach außen anschließende Laufflächen 46 auf, die mit den Führungsflächen 24 der Säule in Berührung stehen. Die Laufflächen 46 haben im Axialschnitt eine Kontur, die annähernd auf demselben Kreis liegt wie diejenige der Führungsflächen 24.

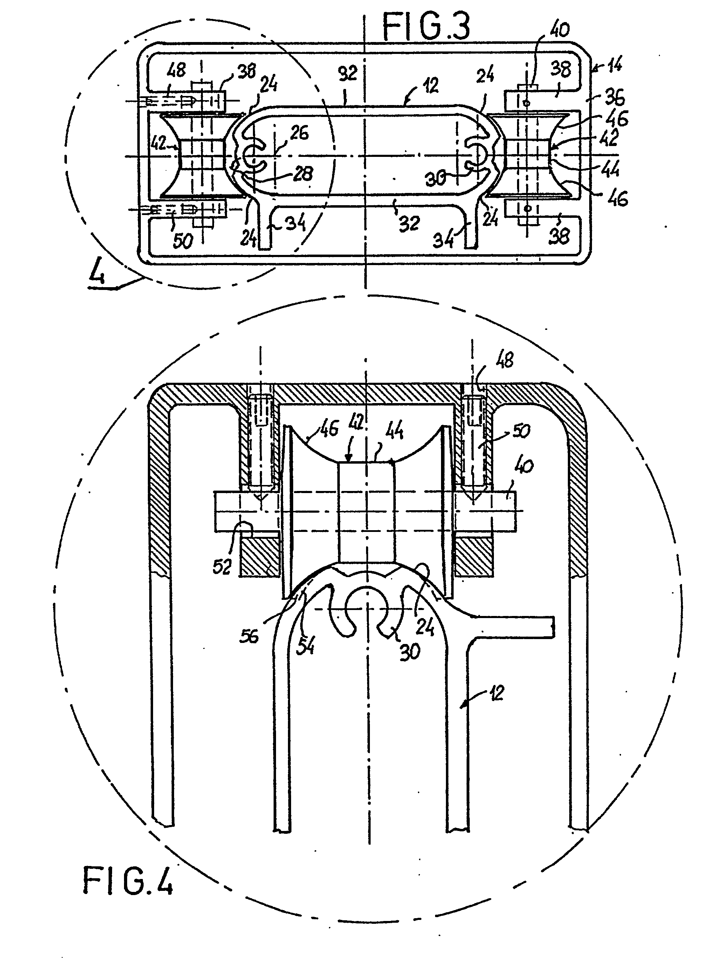

Die in FIG. 3 links dargestellten Rollen 42 sind in Richtung auf die Säule 12 zu verstellbar gelagert. Zu diesem Zweck befinden sich in den Lagerwänden 38 in den Querebenen der beiden Achsen 40 Gewindebohrungen 48, in denen sich Schraubbolzen 50 befinden, die bis in Langlöcher 52 hineinragen, in denen die Achse 40 in Längsrichtung des Säulenquerschnitts verschiebbar aufgenommen ist. Durch Verschrauben der Schraubbolzen 50 wird der Abstand je zweier in, in Längsrichtung des Säulenquerschnittes einander gegenüberliegender Rollen 42 so eingestellt, daß die an den Mittelabschnitt 44 angrenzenden Abschnitte der Laufflächen 46 die Führungsflächen 24 mit leichtem Anpreßdruck berühren.

Wenn im Vorstehenden gesagt ist, daß die Axialschnitt-Kontur der Laufflächen 46 angenähert gleich der Kreisflächenkontur der Führungsflächen 24 ist, so wird dies nachstehend erklärt. Die tatsächliche Kontur der Laufflächen 46 ist eine konkave Kurve, die in FIG. 4 gestrichelt dargestellt ist. Die Kurve 54 stellt die stetige Verbindung zwischen zwei unterschiedlichen Kreisen dar, die konzentrisch zueinander liegen. In dem an den Mittelabschnitt 44 angrenzenden Bereich verläuft die Kurve 54 auf einem Kreis mit dem Radius der Führungsflächen 24 der Säule 12. Am axial außenliegenden Bereich der Laufflächen 46 endet die Kurve 54 dagegen auf einem Kreis mit geringerem Radius. Der Radius des kleineren Kreises ist ca. 10% geringer als derjenige des konzentrischen größeren Kreises.

Da die Rollen 42 aus abriebfestem, in ausreichendem Maß elastisch verformbarem Kunststoff bestehen, wird der axial außenliegende Bereich der Lauffläche 46 im Anlagebereich an der Führungsfläche 24 lokal nach außen gedrückt, sodaß eine breite Anlage zwischen Lauffläche 46 und Führungsfläche 24 erzielt wird. Aufgrund der elastischen Verformung der Lauffläche 46 nimmt der Anpreßdruck der Rolle 42 an der Säule 12 mit zunehmendem Abstand von der Achse 40 stetig zu und ist am axial außenliegenden Ende am größten. Die Säule 12 ist also von den beiden Laufflächen 46 jeder Rolle 42 derart eingespannt, daß die Hauptandrückkräfte durch die elastische Verformung der Außenbereiche der Laufflächen erzielt werden, wobei die Hauptkomponenten der Andrückkräfte parallel zur Richtung der Achse 40 verlaufen. Dieser Teil der Reaktionskräfte wird von der Rolle 42 kompensiert.

Die elastische Verformung der Außenbereiche der Laufflächen 46 trägt maßgeblich dazu bei, daß der Wagen 14 an der Säule 12 sehr ruhig und vibrationsfrei läuft und daß bei Betrieb einer auf der Plattform 16 stehenden Nähmaschine kaum Schwingungen auf die Säule 12 übertragen werden. Diese elastische Verformung wird dank der besonderen Form der Lauffläche 46 erzielt, wobei sich versteht, daß es auf die relative Form zu den Führungsflächen 24 ankommt. Denkt man sich die unverformte Lauffläche 46 in die Kontaktebene der verformten Kontaktlinie hineingedreht, so bildet die verformte Kontaktlinie mit der unverformten Kontaktlinie, nämlich der Kurve 54 einen sichelförmigen Abschnitt, der in FIG. 4 mit 56 bezeichnet ist. Dieser sichelförmige Abschnitt 56 liegt innerhalb der gedachten Säulenwand.

**Patentansprüche**

1. Hubeinrichtung für Lasten und Geräte, bestehend aus mindestens einer Säule, an der ein Wagen mit Hubplattform auf- und abbewegbar geführt ist, der zwei einander gegenüberliegende Wälzlager-Anordnungen aufweist, zwischen denen die Säule sowohl in Längsrichtung des Säulenquerschnittes als auch rechtwinklig dazu eingespannt ist und jede Wälzlager-Anordnung mit zwei spiegelsymmetrisch zur Längsachse des Säulenquerschnittes angeordneten Führungsflächen der Säule in Berührung steht, dadurch gekennzeichnet, daß die Säule (12) aus einem Aluminium-Strangpreßprofil-Abschnitt besteht, bei dem die vier Führungsflächen (24) - querschnittsmäßig gesehen - konvex gekrümmt sind, daß die Wälzlager-Anordnungen aus mindestens drei achsparallelen Rollen (42) aus abriebfestem Kunststoff bestehen, daß jede Rolle (42) einen mittleren, im Abstand von der Säule (12) liegenden Wandabschnitt (44) geringen Querschnittes sowie beidseitig angrenzende Laufflächen (46) mit nach außen allmählich zunehmendem Querschnitt aufweist, deren Konturen - im Axialschnitt gesehen - konkav gekrümmt sind und im Betriebszustand über die ganze axiale Breite an den Führungsflächen (24) der Säule (12) anliegen.

2. Hubeinrichtung nach Anspruch 1, dadurch gekennzeichnet, daß die Querschnittskontur der Laufflächen (46) der Rollen (42) mit Bezug auf diejenige der Führungsflächen (24) der Säule (12) so abgestimmt ist, daß die axial außen liegenden Laufflächenbereiche bei nicht eingebauter Rolle (42) an den Führungsflächen (24) einer imaginären, in relativer Betriebsstellung gedachten Säule (12) in diese eindringen und daß diese Laufflächenbereiche bei eingebauter Rolle (12) unter lokaler elastischer Verformung der Kontur der Führungsflächen (24) angepaßt sind.

3. Hubeinrichtung nach Anspruch 2, dadurch gekennzeichnet, daß die an der Führungsfläche (24) der Säule (12) anliegende Querschnittskontur der Lauffläche (46) mit der diametral gegenüberliegenden, in die Ebene der Kontaktlinie geklappten, unverformten Laufflächen kontur einen sichelförmigen Abschnitt (56) bildet.

4. Hubeinrichtung nach Anspruch 2 oder 3, dadurch gekennzeichnet, daß die Querschnittskonturen der Führungsflächen (24) kreisförmig ausgebildet sind und die Konturen der Laufflächen (46) durch Kurven (52) gebildet sind, welche angrenzend an den Mittelabschnitt (44) der Rolle (42) auf demselben Kreis wie die jeweilige Führungsfläche (24) liegen und im axial außen liegenden Bereich in einen konzentrischen Kreis mit kleinerem Radius enden.

5. Hubeinrichtung nach Anspruch 1, dadurch gekennzeichnet, daß die konvexen Führungsflächen (24) der Säule (12) paarweise wenigstens angenähert einen gemeinsamen Krümmungsmittelpunkt haben.

6. Hubeinrichtung nach einem der Anspruche 1 - 5, dadurch gekennzeichnet, daß je zwei, nicht von derselben Rolle (42) kontaktierte Führungsflächen (24) durch eine ebene Verbindungswand (32) zu einem geschlossenen Hohlprofil verbunden sind.

7. Hubeinrichtung nach einem der Ansprüche 1 - 6, dadurch gekennzeichnet, daß der Säulenwandabschnitt (28), der zwei, von derselben Rolle (42) kontaktierte Führungsflä chen (24) miteinander verbindet, im Bereich des mittleren, die Säule (12) nicht berührenden Rollenabschnittes (44) zurückgesetzt ist.

8. Hubeinrichtung nach Anspruch 7, dadurch gekennzeichnet, daß der zurückgesetzte Säulenwandabschnitt (218) innenseitig von kreisförmiger Kontur ist, daß sich an diesen Säulenwandabschnitt (28) beidseitig in das Säuleninnere hineinragende Stege (30) mit ebenfalls kreisförmiger, konzentrischer Innenkontur anschließen und daß der Säulenwandabschnitt (28) mit den Stegen (30) einen geschlitzten Ringzylinder bilden.

9. Hubeinrichtung nach einem der Ansprüche 6 - 8, dadurch gekennzeichnet, daß an den Enden einer Verbindungswand (32) zwei gleich lange Querwände (34) rechtwinklig nach außen vorstehen, die eine von außen offene Kammer zur Aufnahme einer endlosen Antriebskette begrenzen.

10. Hubeinrichtung nach einem der Ansprüche 1-9, dadurch gekennzeichnet, daß der Wagen (14) ein Gehäuse (36)aufweist, das aus einem Strangpreßprofil in Form eines rechteckförmigen Ringkörpers besteht, von dessen Schmalseiten je zwei parallele, kurze Lagerwände (38) rechtwinklig nach innen ragen, an denen Achsen (40) der Rollen (42) gehaltert sind.

11. Hubeinrichtung nach einem der Ansprüche 1 - 9, dadurch gekennzeichnet, daß mindestens eine Rolle (42) auf einer Achse (40) drehbar gelagert ist, die radial mittels einer Nachstelleinrichtung (48, 50,52) verstellbar angeordnet ist.

12. Hubeinrichtung nach Anspruch 10 und 11, dadurch gekennzeichnet, daß sich in beiden Lagerwänden (38) für die verstellbare Rolle (42) in Verstellrichtung liegende, von außen zugängliche Gewindebohrungen (48) befinden, die je in ein, sich mit der Längsachse ebenfalls in Verstellrichtung erstreckendes Langloch (52) hineinragen, in dem die Rollenachse (40) gehaltert ist und daß in den Gewindebohrungen (48) Schraubbolzen (50) aufgenommen sind, die gegen die Rollenachse (40) drücken.

## Claims

1. Lifting device for loads and apparatus, said lifting device comprising at least one post on which a carriage with a lifting platform is guided on its up and down movement, said carriage comprising two roller bearings, one opposite to the other, the post being clamped in between them both in longitudinal direction of the cross-section of the post and at a right angle thereto, each roller bearing being in contact will with two guide surfaces of the post located in symmetry to the longitudinal axis of the cross-section of the post, characterized in that the post (12) is made of an extruded aluminium profil, of which the four guide surfaces – seen in cross-section – have a convex curvature, in that the roller bearings comprise at least three rollers (42) of a wear resistant plastics, and in that each roller (42) has a central portion (44) of small cross-section located at a distance from the post (12), and two lateral bearing surfaces each contiguous to a side of the central portion, and having a gradually increasing cross-section, said bearing surfaces having – seen in axial section – a concave curvature, and which, in operating condition, contact over their whole axial extension the guide surfaces of the post (12).

2. Lifting device as in claim 1, characterized in that the curvature of the cross-section of the bearing surfaces (46) of the rollers (42) is of such a design with respect to guide surfaces (24) of the post (12) that, when the roller is not mounted, the external regions of the bearing surfaces penetrate into the guide surfaces (24) of an imaginary post (12) thought to be in a relative operating position, and that, when the roller (12) is mounted, these regions of the bearing surfaces are adjusted under elastic deformation to the curvature of the guide surfaces (24).

3. Lifting device as in claim 2, characterized in that the curvature of the cross-section of the bearing surfaces (46) of the rollers (42) which contacts the guide surface (24) of the post (12) forms with the undeformed curvature of the diametrically opposed roller, as seen in the plane of contact, a sickle-shaped section (56).

4. Lifting device as in claim 2 or 3, characterized in that the curvature of the guide surfaces (24) are circular and the curvatures of the bearing surfaces (46) are curves which adjacent to the central section (44) of the roller (42) are on the same circle as the corresponding guide surface (24) and in the axially distant region end in a concentric circle of smaller radius.

5. Lifting device as in claim 1, characterized in that the convex curvature (24) of the post (12) have pair-wise at least approximatively the same center of curvature.

6. Lifting device as in one of the claims 1 to 5, characterized in that each two guide surfaces (24) which are not contacted by the same roller (42) are connected by a flat connection wall (32) to form a closed hollow profile.

7. Lifting device as in one of the claims 1 to 6, characterized in that a wall section (28) of the post which connects two guide surfaces (24) contacted by the same roller (42) is recessed.

8. Lifting device as in claim 7, characterized in that the recessed wall section (28) of the post has in the inside a circular contour, in that ribs (30) extending into the interior of the post and which have also a circular concentric interior contour are joining the two sides of said wall section (28) of the post, and in that the wall section (28) of the post with the ribs (30) forms a slotted annular cylinder.

9. Lifting device as in one of the claims 6 to 8, characterized in that at the end of a connection wall (32) two transversal walls (34) of the same length protrude rectangularily outward, said transversal walls delimitting a chamber open from the outside to receive an endless drive chain.

10. Lifting device as in one of the claims 1 to 9, characterized in that the carriage (14) comprises a housing (36) consisting of an extruded profile in form of a rectangular ring body, said rectangular ring body comprising small sides from each of which two parallel short bearing walls (38) supporting the axles (40) of the rollers (42) protrude rectangularily inward.

11. Lifting device as in one of the claims 1 to 9, characterized in that at least one roller (42) is rotatably mounted on an axle (42), which is radially adjustable by an adjusting device (48, 50, 52).

12. Lifting device as in claim 10 and 11, characterized in that for the adjustable roller tapped holes (48) aligned in direction of adjustment and accessible from the outside are located in both bearing walls (38), said tapped holes ending in a slotted hole (52) extending also in direction of adjustment and keeping the axle (40) of the roller, and in that screws (50) are threaded into the tapped holes (48), said screws pressing against the axle (40) of the roller.

## Revendications

1. Dispositif de levage pour charges et appareils, se composant d'au moins une colonne sur laquelle est guidée dans son mouvement ascendant et descendant un chariot à plate-forme élévatrice, qui présente deux dispositifs de roulement à galets opposes l'un à l'autre, entre lesquels la colonne est enserrée aussi bient dans la direction longitudinale de sa section transversale que perpendiculairement à cette direction, chaque dispositif de roulement à galets étant en contact avec deux surfaces de guidage de la colonne, disposées symétriquement par rapport à l'axe longitudinal de la section de la colonne, caractérisé en ce que la colonne (12) est faite d'un segment de profilé filé d'aluminium, sur lequel les quatre surfaces de guidage (24) – considérées en coupe transversale – présentent une courbure convexe, en ce que les dispositifs de roulement à galets comprennent au moins trois galets à axes parallèles (42) en matière plastique résistante à l'usure, et en ce que chaque galet (42) présente un segment de paroi médian (44) de petite section transversale, situé à distance de la colonne (12), ainsi que deux surfaces de roulement (46) disposées de chaque côté du segment médian et contigues à celui-ci, ayant chacune une section transversale progressivement croissante vers l'extérieure, surfaces de roulement dont les contours – considérés en coupe axiale – présentent une courbure concave et, en position de service, s'appliquent par toute leur étendue axiale sur les surfaces de guidage (24) de la colonne (12).

2. Dispositif de levage selon la revendication 1, caractérisé en ce que le contour de la section transversale des surfaces de roulement (46) des galets (42) est dessiné, par rapport à celui des surfaces de guidage (24) de la colonne (12), de telle manière que lorsque le galet (42) n'est pas monté, les régions des surfaces de roulement situées extérieurement en direction axiale pénètrent dans une colonne imaginaire (12), considérée en position relative de service, au niveau des surfaces de guidage (24) de celle-ci, et que lorsque le galet (42) est monté, ces régions des surfaces de roulement s'adaptent avec déformation élastique locale au contour des surfaces de guidage (24).

3. Dispositif de levage selon la revendication 2, caractérisé en ce que le contour de la section tranversale de la surface de roulement (46) appliquée sur la surface de guidage (24) de la colonne (12) forme, avec le contour de la surface de roulement diamétralement opposé, non déformé, rabattu dans le plan de la ligne de contact, un segment en forme de croissant (56).

4. Dispositif de levage selon la revendication 2 ou 3, caractérisé en ce que les contours des sections transversales des surfaces de guidage (24) sont réalisés sous forme circulaire et les contours des surfaces de roulement (46) sont formés par des courbes (52) qui, au voisinage immédiat du segment médian (44) du galet (42), sont situées sur le même cercle que la surface de guidage (24) correspondante et, dans la région située extérieurement en direction axiale, se terminent en un cercle concentrique de plus petit rayon.

5. Dispositif de levage selon la revendication 1, caractérisé en ce que les surfaces de guidage convexes (24) de la colonne (12) ont par paires, au moins approximativement, un centre de courbure commun.

6. Dispositif de levage selon l'une quelconque des revendications 1 à 5, caractérisé en ce que les deux surfaces de guidage (24) avec lesquelles n'entre pas en contact le même galet (42) sont à chaque fois jointes par une paroi de jonction par une paroi de jonction plane (32) l'ensemble formant un profilé creux fermé.

7. Dispositif de levage selon l'une quelconque des revendications 1 à 6, caractérisé en ce que le segment de paroi (28) de la colonne qui relie l'une à l'autre deux surfaces de guidage (24) avec lesquelles entre en contact le même galet (42) est en retrait au niveau du sement (44) des galets qui n'est pas en contact avec la colonne (12).

8. Dispositif de levage selon la revendication 7, caractérisé en ce que le segment de paroi en retrait (28) de la colonne a un contour circulaire du côté intérieur, en ce que des ailes (30), qui font saillie à l'intérieure de la colonne et qui ont également un contour intérieur circulaire concentrique se raccordent des deux côtés à ce segment de paroi (28) de la colonne, et en ce que le segment de paroi (28) de la colonne forme, avec les ailes (30), un cylindre annulaire fendu.

9. Dispositif de levage selon l'une quelconque des revendications 6 à 8, caractérisé en ce qu'aux extrémités d'une paroi de jonction (32), deux parois tranversales (34) de même longueur font saillie perpendiculairement vers l'extérieure, délimitant une chambre ouverte en dehors, destinée à recevoir une chaîne d'entraînement sans fin.

10. Dispositif de levage selon l'une quelconque des revendications 1 à 9, caractérisé en ce que le chariot (14) présente un carter (36) qui est constitué par un profilé filé en forme de corps annulaire rectangulaire, sur chacun des petits côtés duquel font saillie à angle droit vers l'intérieur deux courtes parois parallèles de support (38) auxquelles sont fixés des axes (40) pour les galets (42).

11. Dispositif de levage selon l'une quelconque des revendications 1 à 9, caractérisé en ce qu'au moins un galet (42) est monté à rotation sur un axe (40) qui est monté de façon réglable en direction radiale au moyen d'un dispositif de rattrapage de jeu (48, 50, 52).

12. Dispositif de levage selon les revendications 10 et 11, caractérisé en ce qu'il est pratiqué dans les deux parois de support (38) pour le galet réglable (42), des forures taraudées (48) accessibles de l'extérieure et s'étendant dans la direction de réglage, forures qui débouchent chacune dans un trou oblong (52) dont l'axe longitudinal s'étend également dans la direction de réglage et dans lequel est maintenu l'axe (40) du galet, et en ce qu'il est reçu, dans les forures taraudées (48), des boulons filetés (50) qui sont pressés contre l'axe (40) du galet.

FIG.1

FIG.2

FIG.3

FIG.4